# EUROPEAN PATENT SPECIFICATION

(11) **EP 1 900 142 B1**
(45) Date of publication and mention of the grant of the patent: **10.08.2016**
(21) Application number: 06748051.7
(22) Date of filing: 20.06.2006
(51) Int. Cl.: G06Q 20/02, G06Q 20/24, H04W 4/24, H04L 12/14, H04L 29/06

(54) **SERVER, NETWORK AND METHOD FOR IMPLEMENTING ONLINE CREDIT CONTROL FOR A TERMINAL**
SERVER, NETZWERK UND VERFAHREN ZUM IMPLEMENTIEREN EINER ONLINE-KREDITKONTROLLE FÜR EIN ENDGERÄT
SERVEUR, RÉSEAU ET PROCÉDÉ DE MISE EN OEUVRE DE COMMANDE DE CRÉDIT EN LIGNE POUR UN TERMINAL

(30) Priority: 29.06.2005 US 695082 P; 16.06.2006 US 424701
(43) Date of publication of application: 19.03.2008
(73) Proprietor: Telefonaktiebolaget LM Ericsson (publ), 164 83 Stockholm (SE)
(72) Inventor: TEPPO, Patrik, S-37300 Jämjö (SE)
(74) Representative: Brann AB
(86) International application number: PCT/SE2006/050212
(87) International publication number: WO 2007/001231

(56) References cited:
- EP-A1- 1 724 965
- WO-A1-2004/036871
- WO-A2-03/025809
- TELEFÃ NICA: "TS32.252 WLAN Direct IP Access Online Charging: RADIUS prepaid - Diameter credit control inter-working", 3GPP DRAFT; S5-054013 TS32.252 WLAN DIRECT IP ACCESS ONLINE CHARGING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Sophia Antipolis, France; 20050111, 11 January 2005 (2005-01-11), XP050300363, [retrieved on 2005-01-11]
- SA5 (TELECOM MANAGEMENT): "Rel-6 TS 32252-100 WLAN Charging - for SA Information", 3GPP DRAFT; SP-050028, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG SA, no. Tokyo, Japan; 20050301, 1 March 2005 (2005-03-01), XP050204252, [retrieved on 2005-03-01]
- SA5 (GGFJNUORTELNETWORKS COM): "Correction of Termination action", 3GPP DRAFT; S5-054188 REL-6 CR32299 TERMINATION ACTIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Lisbon, Portugal; 20050126, 26 January 2005 (2005-01-26), XP050300578, [retrieved on 2005-01-26]

## Description

### CLAIMING BENEFIT OF PRIOR FILED PROVISIONAL APPLICATION

This application claims the benefit of U.S. Provisional Application Serial No. 60/695,082 filed on June 29, 2005 and entitled "Adding Message Flows for Wf and Wo Referense Point."

### BACKGROUND OF THE INVENTION

### Field of the Invention

The present invention relates to a network and a method for implementing online credit control (e.g. for prepaid access) so that a service can be rated and a subscriber charged or credit controlled before they can use a terminal to access the service. In one embodiment, the network (e.g., 3GPP network) includes an AAA server which uses an authentication functionality to enable an access server (associated with an access network) to implement online credit control for a terminal. In this embodiment, the access server (e.g., WLAN access server) supports the existing RADIUS/Diameter protocol but it does not support a Diameter Credit Control Application (or a similar application like RADIUS Prepaid) as disclosed in for example TELEFONICA: "TS32.252 WLAN Direct IP Access Online Charging: RADIUS prepaid- Diameter credit control inter-working", 3GPP DRAFT; S5-054013 TS32.252 WLAN DIRECT IP ACCESS ONLINE CHARGING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, vol. SA WG5, no. Sophia Antipolis, France; 20050111, 11 January 2005 (2005-01-11 ), XP050300363 or SA5 (TELECOM MANAGEMENT): "Rel-6 TS 32252-100 WLAN Charging- for SA Information", 3GPP DRAFT; SP-050028, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG SA, no. Tokyo, Japan; 20050301, 1 March 2005 (2005-03-01), XP050204252.

### Description of Related Art

The following abbreviations are herewith defined, at least some of which are referred to in the ensuing description of the prior art and the preferred embodiments of the present invention.
- ACR: Accounting Control Request
- AN: Access Node
- CCA: Credit Control Authorisation
- CCR: Credit Control Request
- DCC: Diameter Credit Control
- GPRS: General Package Radio Services
- GSM: Global System for Mobile Communications
- IETF: Internet Engineering Task Force
- LAN: Local Area Network
- MMS: Multimedia Messaging Service
- OCS: Online Charging System
- RADIUS: Remote Authentication Dial in User Service
- RFC: Request for Comments
- SMS: Short Message Service
- UE: User Equipment
- UMTS: Universal Mobile Telecommunications System
- Wo: Reference point between a 3GPP AAA Server and an OCS
- WLAN: Wireless LAN

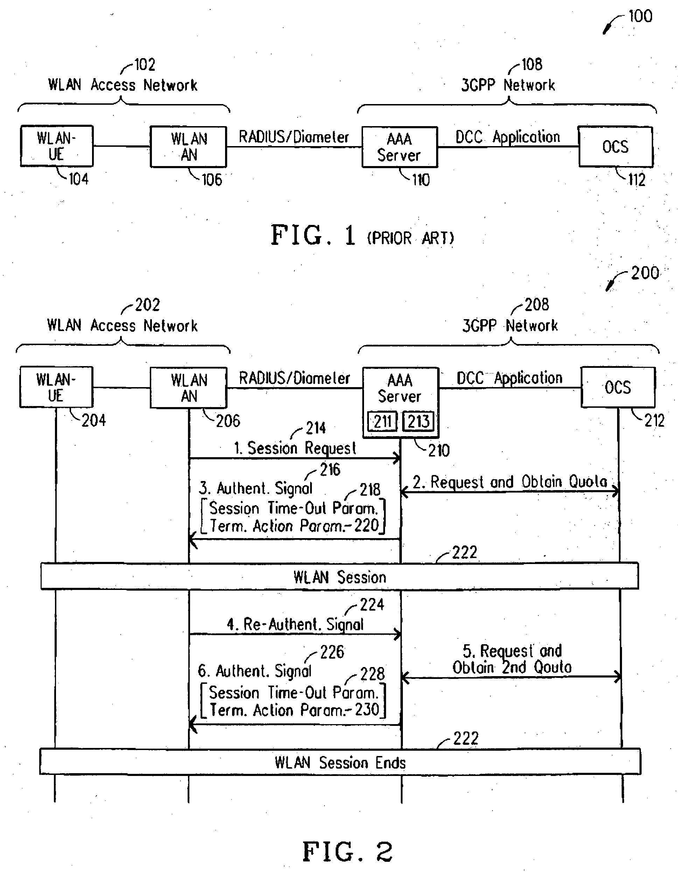

Referring to FIGURE 1 (PRIOR ART), there is shown a block diagram of a traditional GSM/UMTS core network charging architecture 100 that is used to help explain an online credit control problem which is solved by the present invention. As shown, the traditional GSM/UMTS core network charging architecture 100 has an access network 102 (e.g., WLAN access network 102) which includes a terminal 104 (e.g., WLAN UE. 104) (one shown) and an access node 106 (e.g., WLAN access node 106). In addition, the traditional GSM/UMTS core network charging architecture 100 has a 3GPP network 108 which includes an AAA server 110 and an OCS 112. For clarity, only the components associated with the traditional GSM/UMTS core network charging architecture 100 which are needed to discuss the present invention are illustrated and described herein.

As shown, this third-generation (3G) wireless system 100 implements a charging solution by utilizing the well known RADIUS/Diameter protocols (see IETF RFC 2138 "RADIUS" and IETF RFC 3588 "DIAMETER") to authenticate subscribers, authorize service and charge the subscriber. Basically, the Diameter protocol provides an Authentication, Authorization and Accounting (AAA) framework for applications such as network access or IP mobility. And, the Diameter base protocol provides the minimum requirements needed for a AAA protocol. The base protocol may be used by itself for accounting purposes only", or it may be used with a Diameter application. However, the accounting part of the RADIUS/Diameter protocol is not an online interface which means that a service can not be rated and the subscriber can not be charged before they access the service. In other words, the subscriber can not use a real time prepaid solution so they can pay in advance for a service and then later access and use a particular service. To address this problem, a Diameter Credit Control (DCC) Application has been implemented to enable the online credit control for a subscriber. This works well if the access node supports both the RADIUS/Diameter protocol and the DCC Application. But, there are many legacy-type access nodes like WLAN access node 106 which do support the existing RADIUS/Diameter protocol but do not support the DCC application and as a result these access nodes can not implement online credit control for the subscriber.

A second way this problem can be address was discussed in the co-assigned PCT Patent Application WO 02/067498 A1 entitled "Prepaid Access to Internet Protocol (IP) Networks". This particular solution required that the RADIUS protocol be changed so that new information associated with online credit control can be sent on the RADIUS interface between the access node and the AAA server. The access node if properly configured could then use this new information to monitor the subscriber's usage of a service and also re-authorize or stop the subscriber's usage of the service. This particular solution which is known as RADIUS Prepaid works well if the access node supports the new extension. However, there are still many legacy type access nodes like WLAN. access node 106 which do not support this RADIUS Prepaid extension and as a result these access nodes can not implement online credit control for the subscriber. Hence, there is a need for a prepaid online credit control solution which can be used by a legacy WLAN access node 106 that supports the existing RADIUS/Diameter protocol but does not support a DCC application (or a similar application like RADIUS Prepaid). This need and other needs are addressed by the present invention.

### BRIEF DESCRIPTION OF THE INVENTION

The present invention is defined by the subject matter of the independent claims. Preffered embodiments are defined by the dependent claims.

### BRIEF DESCRIPTION OF THE DRAWINGS

A more complete understanding of the present invention may be had by reference to the following detailed description when taken in conjunction with the accompanying drawings wherein:
FIGURE 1 (PRIOR ART) is a block diagram of a traditional GSM/UMTS core network charging architecture that is used to help explain an online credit control problem which will be solved by the present invention;
FIGURE 2 is a block diagram of a GSM/UMTS core network charging architecture which is used to help explain how the problem associated with providing online credit control is solved by the present invention;
FIGURE 3 is a signal flow diagram that illustrates the basic steps for implementing an online credit control between an AAA server and a legacy access node (e.g., WLAN access node) in accordance with a first embodiment of the present invention;
FIGURE 4 is a signal flow diagram that illustrates the basic steps for implementing an online credit control between an AAA server and a legacy access node (e.g., WLAN access node) in accordance with a second embodiment of the present invention; and
FIGURE 5 is a signal flow diagram that illustrates the basic steps for implementing an online credit control between an AAA server and a legacy access node (e.g., WLAN access node) in accordance with a third embodiment of the present invention.

### DETAILED DESCRIPTION OF THE DRAWINGS

Referring to FIGURE 2, there is shown a block diagram of a GSM/UMTS core network charging architecture 200 which is used to help explain how the problem associated with providing an online credit control is solved by the present invention. As shown, the GSM/UMTS core network charging architecture 200 has an access network 202 (e.g., WLAN access network 202) which includes a terminal 204 (e.g. WLAN UE 204) (one shown) and an access node 206 (e.g., WLAN access node 206). In this discussion, the WLAN access server 206 is assumed to be able to support the existing RADIUS/Diameter protocol but is not able to support a DCC Application (or similar application like RADIUS Prepaid). The GSM/UMTS core network charging architecture 200 also has a 3GPP network 208 which includes an AAA server 210 and an OCS 212. The components 202, 204, 206, 208, 210 and 212 are the same as the components 102, 104, 106, 108, 110 and 112 shown in FIGURE 1 (PRIOR ART) except that the AAA server 210 has been enhanced to use its authentication functionality to enable the legacy WLAN access node 206 to implement online credit control (repaid-access) for the terminal 204.

The enhanced AAA server 210 includes a processor 211 that processes instructions stored within a memory 213 to be able to function as follows: (1) receive a signal 214 from the legacy WLAN access node 206 indicating that a subscriber using terminal 204 wants to access a session (see step 1); (2) interact with the external OCS 212 (or integrated OCS 212) which determines a quota related to an allowed service usage for the terminal 204 (see step 2); and (3) send an authentication signal 216 to the legacy WLAN access node 206 (see step 3). The authentication signal 216 is not a typical authentication signal because it contains a session time-out parameter 218) being an authentification lifetime in a RADIUS/ Diameter protocol (which is based on quota) and a termination action parameter 220 (which indicates that the legacy WLAN access node 206 needs to either terminate the session 222 or initiate a re-authentication request after exceeding a predetermined amount of time set by the session time-out parameter 218). Upon receiving the authentication signal 216, the WLAN access node 206 enables the terminal 204 to the access the service.

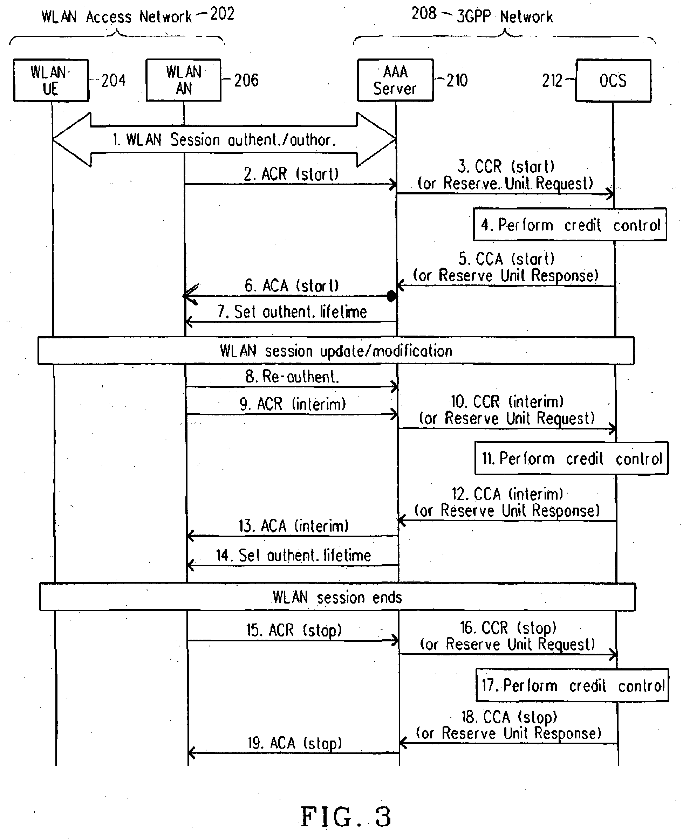

Once the time associated with the session time-out parameter 218 expires and the subscriber still wants to continue the session 222, then the legacy WLAN access node 206 needs to send a re-authentication signal 224 (pursuant to the termination action parameter 218) towards the AAA server 210. Thereafter, the AAA server 210 functions to: (4) receive the re-authentication request signal 224 from the legacy WLAN access node 206 (see step 4); (5) interact with the OCS 212 which determines a second quota related to the remaining allowed service usage for the terminal 204 (see step 5); and (6) send a second authentication signal 226 to the legacy WLAN access node 206 (see step 6). The second authentication signal 226 contains a session time-out parameter 228 (which is based on the second quota) and a termination action parameter 230 (which indicates that the legacy WLAN access node 206 needs to either terminate the session 222 or initiate a second re-authentication request after exceeding a predetermined amount of time set by the session time-out parameter 226). It should be noted that steps 4-6 can be repeated as many times as needed so long as there is enough credit in the subscribers prepaid account (which is located in the OSC 212). However, in this example, the terminal 204 (or other party) discontinued the session 222 before another re-authentication signal would be needed to be sent to the AAA server 210. A detailed discussion about three different ways that the AAA server 210 (and the OSC 212) can function in accordance with the present invention are described below with respect to the signal flow diagrams shown in FIGURES 3-5.

Referring to FIGURE 3, there is a signal flow diagram that illustrates the basic steps for implementing online credit control between the AAA server 210 and the legacy WLAN access node 206 in accordance with a first embodiment of the present invention. In this embodiment, it is assumed that the WLAN access node 206 supports the accounting functionality of the. RADIUS/Diameter protocol. The steps are as follows:
1. The WLAN UE 204 (terminal 204) requests a WLAN session (see step 1 in FIG. 2).
2. The WLAN access node 206 starts an accounting session with the 3GPP AAA server 210 by sending an ACR to the 3GPP AAA server 210.
3. The 3GPP AAA server 210 sends a CCR (or Reserve Unit Request message) to the OCS 212 (see step 2 in FIG. 2).
4. The OCS 212 performs credit control (rating/reservation of quota)(see step 2 in FIG. 2).
5. The OCS 212 replies with a CCA (or Reserve Unit Response message) with a quota (if granted by the OCS 212)(see step 2 in FIG. 2).
6. The 3GPP AAA server 210 acknowledges the accounting session with the WLAN access network 202 by sending an ACA to the WLAN AN 206.
7. The 3GPP AAA server 210 sends an authentication signal 216 to the WLAN AN 206 after setting the session timeout 218 (and setting the termination action 220 to new request) for the WLAN session 222 based on the time quota assigned by the OCS 212 (see step 3 in FIG. 2).
8. The WLAN access node 206 re-authenticates when the timeout has expired by sending a re-authentication signal 224 to the 3GPP AAA server 210 (see step 4 in FIG. 2).
9. The WLAN access node 206 sends an interim ACR to the 3GPP AAA server 210.
10. Based on the interim ACR and the re-authentication messages, the 3GPP AAA server 210 prepares a new CCR (or Reserve Unit Request message) and sends it to the OCS 212 (see step 5 in FIG. 2).
11. The OCS 212 performs credit control (rating/reservation of quota)(see step 5 in FIG. 2).
12. The OCS 212 replies with an interim CCA (or Reserve Unit. Response message) with a quota (if granted by OCS 212) (see step 5 in FIG. 2).
13. The 3GPP AAA server 210 acknowledges the accounting session to WLAN access network 202 by sending an interim ACA to the WLAN AN 206.
14. The 3GPP AAA server 210 sends an authentication signal 226 to the WLAN AN 206 after setting the session timeout 228 (and setting the termination action 230 to new request) for the WLAN session 222 based on the second time quota assigned by the OCS 212 (see step 6 in FIG. 2).
15. When the WLAN session ends, then the WLAN access node 206 sends an ACR (stop) to the 3GPP AAA server 210.
16. The 3GPP AAA server 210 prepares a CCR (or Reserve Unit Request message) with information from the ACR and sends it to the OCS 212.
17. The OCS 212 performs credit control (updates the account/return back unused quota).
18. The OCS 212 send a CCA (or Reserve Unit Response message) to the 3GPP AAA server 210.
19. The 3GPP AAA server 210 acknowledges the end of the accounting session by sending an ACA (stop) to the WLAN access node 206.

This procedure is shown where the quota is based on time (in this case the credit risk could be decreased if small time reservations are used). However, the quota can also be based on a unit other than pure time, like volume or a combination of time/volume. In this case, the OCS 212 delivers a quota in e.g. volume or time/volume which is transformed by the AAA server 210 and given as a time value (in the auth. lifetime--see step 7) to the WLAN AN 206. The WLAN AN 206 then reports the used volume/time within the ACR (see step 9) to the AAA server 210. The AAA server 210 can then transfer the used volume/time in the CCR (see step 10) to the OCS 212 for rating/deduction (as discussed above). However, the AAA server 210 can also make use of this information itself to regulate the transformation function. For instance, in step 7 the transformation is initially AuthLifetime:=Quota(Mbytes)*20seconds but since the used volume in step 9 is only for example half of the received quota the formula is changed to AuthLifetime:=Quota(Mbytes)*40 seconds.

Moreover, there can be more than one interim DCC (or similar) transaction (see steps 10-12) for a WLAN session 222. And, the OCS 212 can define the interim report interval when it sets the reserved quota.

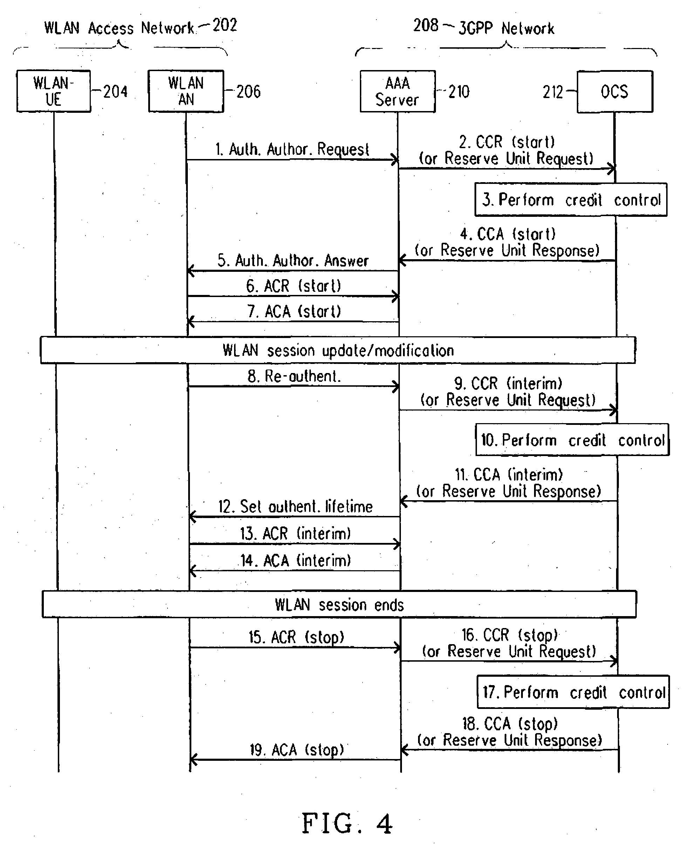

Referring to FIGURE 4, there is a signal flow diagram that illustrates the basic steps for implementing online credit control between the AAA server 210 and the legacy WLAN access node 206 in accordance with a second embodiment of the present invention. In this embodiment, it is assumed that the WLAN access node 206 supports the accounting functionality of the RADIUS/Diameter protocol. The steps are as follows:
1. The WLAN access network 202 starts authentication/authorization with the 3GPP AAA server 210 (see step 1 in FIG. 2).
2. The 3GPP AAA server 210 sends a CCR (or Reserve Unit Request message) to the OCS 212 (see step 2 in FIG. 2).
3. The OCS 212 performs credit control (rating/reservation of quota)(see step 2 in FIG. 2).
4. The OCS 212 replies with a CCA (or Reserve Unit Response message) with a quota (if granted by the OCS 212)(see step 2 in FIG. 2).
5. The 3GPP AAA server 210 sends the WLAN access network 202 an authentication/authorization signal 216 which contains a session timeout 218 (and termination, action 220 set to new request) based on the reserved quota (see step 3 in FIG. 2).
6. The WLAN access node 206 starts an accounting session by sending an ACR to the 3GPP AAA server 210.
7. The 3GPP AAA server 210 acknowledges the accounting session with the WLAN access network 202 by sending an ACA to the WLAN AN 206.
8. The WLAN access node 206 re-authenticates when the session-timeout has expired by sending a re-authentication signal 224 to the 3GPP AAA server 210 (see step 4 in FIG. 2).
9. Based on the re-authentication message, the 3GPP AAA server 210 prepares an interim CCR (or Reserve Unit Request message) and sends it to the OCS 212 (see step 5 in FIG. 2).
10. The OCS 212 performs credit control (rating/reservation of quota)(see step 5 in FIG. 2).
11. The OCS 212 replies with an interim CCA (or Reserve Unit Response message) with a quota (if granted by the OCS 212)(see step 5 in FIG. 2).
12. The 3GPP AAA server 210 sends an authentication signal 226 to the WLAN AN 206 after setting the session timeout 228 (and setting the termination action 230 to new request) for the WLAN session 222 based on the second time quota assigned by the OCS 212 (see step 6 in FIG. 2).
13. The WLAN access node 206 sends an interim ACA to the 3GPP AAA server 210.
14. The 3GPP AAA server 210 acknowledges the accounting message by sending an interim ACA to the WLAN AN 206.
15. When the WLAN session ends, then WLAN access node 206 sends an ACR (stop) to the 3GPP AAA server 210.
16. The 3GPP AAA server 210 prepares a CCR (or Reserve Unit Request message) with information from the ACR and sends it to the OCS 212.
17. The OCS 212 performs credit control (updates the account/return back unused quota).
18. The OCS 212 acknowledges by sending a CCA (or Reserve Unit Response message) to the 3GPP AAA server 210.
19. The 3GPP AAA server 210 acknowledges the end of the accounting session by sending an ACA (stop) to the WLAN AN 206.

This solution is shown as supporting full credit control when charging is based on time. Note: charging based on volume is not possible in this scenario.

There can be more. than one interim DCC (or similar). transaction (see steps 9-11) for a WLAN session 222. And, then OCS 212 can define the interim report interval when it sets the reserved quota.

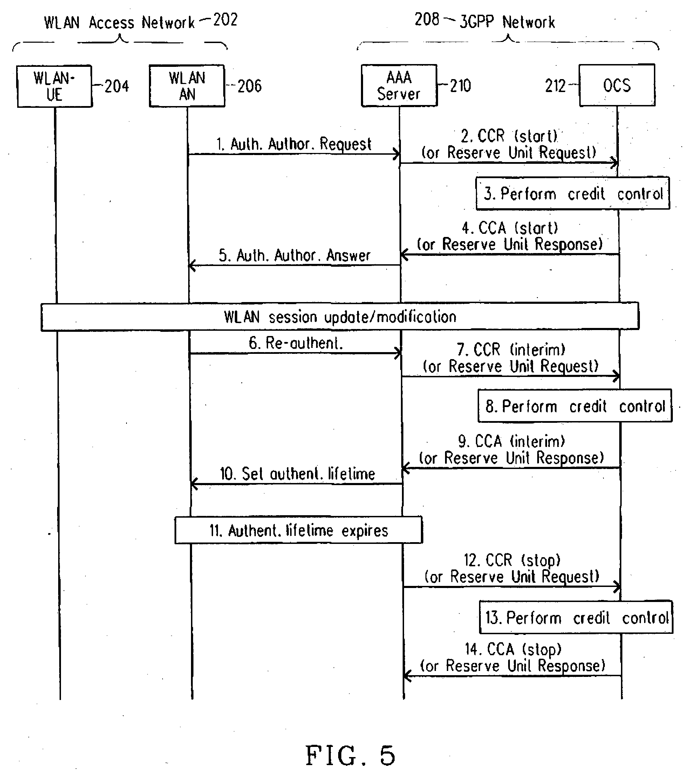

Referring to FIGURE 5, there is a signal flow diagram that illustrates the basic steps for implementing online credit control between the AAA server 210 and the legacy WLAN access node 206 in accordance with a third embodiment of the present invention. In this embodiment, it is assumed that the WLAN access node 206 does not support the accounting functionality of the RADIUS/Diameter protocol. The steps are as follows:
1. The WLAN access network 202 starts authentication/authorization with the 3GPP AAA server 210 (see step 1 in FIG. 2).
2. The 3GPP AAA server 210 sends a CCR (or Reserve Unit Request message) to the OCS 212 (see step 2 in FIG. 2).
3. The OCS 212 performs credit control (rating/reservation of quota)(see step 2 in FIG. 2).
4. The OCS 212 replies with a CCA (or Reserve Unit Response message) with a quota (if granted by the OCS 212) (see step 2 in FIG. 2).
5. The 3GPP AAA server 210 sends the WLAN access network 202 an authentication/authorization signal 216 which contains a session timeout 218 (and termination action 220 set to new request) based on the reserved quota (see step 3 in FIG. 2).
6. The WLAN access node 206 re-authenticates when the session-timeout has expired by sending a re-authentication signal 224 to the 3GPP AAA server 210 (see step 4 in FIG. 2).
7. Based on the re-authentication message, the 3GPP AAA server 210 prepares an interim CCR (or Reserve Unit Request message) and sends it to the OCS 212 (see step 5 in FIG. 2).
8. The OCS 212 performs credit control (rating/reservation of quota)(see step 5 in FIG. 2).
9. The OCS 212 replies with an interim CCA (or Reserve Unit Response message) with a quota (if granted by the OCS 212)(see step 5 in FIG. 2).
10. The 3GPP AAA server 210 sends an authentication signal 226 to the WLAN AN 206 after setting the session timeout 228 (and setting the termination action 230 to new request) for the WLAN session 222 based on the second time quota assigned by the OCS 212 (see step 6 in FIG. 2).
11. When the authentication timeout expires and no new re-authentication has been performed, then the WLAN session 222 will be handled as closed.
12. The 3GPP AAA server 210 prepares a CCR stop (or Reserve Unit Request message) with used units as the authentication timeout, and sends it to OCS 212.
13. The OCS 212 performs credit control (updates the account/return back unused quota).
14. The OCS 212 sends a CCA stop (or Reserve Unit Response message) as acknowledgement to the 3GPP AAA server 210.

This solution supports full credit control when charging is based on time. However, the WLAN user can be over-charged because the OCS 212 stops charging when the last re-authentication timeout has expired. This needs to happen because the 3GPP AAA server 210 and OCS 212 never know exactly when the WLAN session 222 ends.

There can be more than one interim DCC (or similar) transaction (see steps 7-9) for a WLAN session. And, the OCS 212 can define the interim report interval when it sets the reserved quota.

From the foregoing, it should be appreciated that the present invention uses the existing authentication lifetime functionality in RADIUS to enable online charging. In the past, the authentication lifetime functionality was used to get the terminal 204 to re-authenticate within a defined interval so that the AAA server 210 can control the authentication lifetime. However, the present invention uses the authentication lifetime functionality for online credit control. In particular, the present invention uses the authentication lifetime to grant usage for a defined time based on credit within the subscriber's prepaid account. Thus, a reservation is done on the prepaid account for a defined time period and this is sent back to the legacy access node 206 (e.g., WLAN access node 206) in the authentication lifetime parameter. And, when this lifetime expires, the legacy access node 206 needs to re-authenticate to get a new lifetime. Then, the subscriber's account is deducted with the used time and a new reservation is done for a new lifetime.

## Claims

1. An AAA server (210), comprising:
a processor (211);
a memory (213); and
instructions accessible from said memory and processable by said processor to facilitate:
receiving a signal (214) from an access node (206) requesting a session for a terminal;
interacting with an online charging system (212) to receive a quota (2) related to an allowed service usage for the terminal (204); and
sending an authentication signal (216) to said access node, **characterized in that** said authentication signal contains a session time-out parameter (218) dependent upon the quota, said session time-out parameter being an authentication lifetime in a RADIUS/Diameter protocol.

2. The AAA server of Claim 1, wherein said authentication signal further contains a termination action parameter (220) which indicates that the access node needs to either terminate the session (222) or initiate a re-authentication request after exceeding a predetermined amount of time set by the session time-out parameter.

3. The AAA server of Claim 2, wherein said processor further facilitates:
receiving a re-authentication request signal (224) from said access node requesting that the service be extended for the terminal;
interacting with said online charging system which determines a second quota related to the remaining allowed service usage for the terminal; and
sending a second authentication signal (226) to said access node, wherein said second authentication signal contains a session time-out parameter (228) which is based on the second quota and a termination action parameter (230) which indicates that the access node needs to either terminate the session or initiate a second re-authentication request after exceeding a predetermined amount of time set by the session time-out parameter.

4. The AAA server of Claim 3, wherein said processor further facilitates the interacting with said online charging system by sending a signal indicating a used quota to said online charging system which then debits a service account associated with the terminal.

5. The AAA server of Claim 3, wherein said processor further facilitates:
receiving an ACR signal indicating used volume/time from said access node; and
sending a CCR signal indicating the used volume/time to said online charging system.

6. The AAA server of Claim 1, wherein said processor facilitates the use of signals associated with a Diameter Credit Control Application to interact with said online charging system.

7. The AAA server of Claim 1, wherein said processor facilitates the use of authorization and authentication signals associated with a RADIUS/Diameter protocol to interact with said access node.

8. The AAA server of Claim 1, wherein said processor facilitates the use of authorization, authentication and accounting signals associated with a RADIUS/Diameter protocol to interact with said access node.

9. The AAA server of Claim 1, wherein said quota is:
a time quota;
a volume quota; or
a combined time/volume quota.

10. The AAA server of Claim 9, wherein if said quota is based on said volume quota or said combined time/volume quota then said processor implements a transformation function to transform said volume quota or said combined time/volume quota into a time quota which is used in said session time-out parameter.

11. The AAA server of Claim 10, wherein said transformation function is adapted to transform said volume or time/volume quota into said time quota by using a previously received and actually used volume or used time/volume.

12. A method for implementing online credit control within a communications network, said method comprising the steps of:
Receiving (1), at an AAA server, a signal (214) from an access node requesting,a session for a terminal;
Sending (2), from said AAA server, a request signal to an online charging system, where said online charging system determines a quota related to an allowed service usage for the terminal;
Receiving (2), at said AAA server, a response signal containing the quota from said online charging system; and
Sending (3), from said AAA server, an authentication signal (216) to said access node, **characterized in that** said authentication signal contains a session time-out parameter dependent upon the quota, said session time-out parameter being an authentication lifetime in a RADIUS/Diameter protocol:

13. The method of Claim 12, wherein said authentication signal further contains a termination action parameter (220) which indicates that the access node needs to either terminate the session or initiate a re-authentication request after exceeding a predetermined amount of time set by the session time-out parameter.

14. The method of Claim 13, further comprising the steps of:
Receiving (4), at said AAA server, a re-authentication request signal (224) from said access node requesting that the service be extended for the terminal;
Sending (5), from said AAA server, a second request signal to said online charging system, where said online charging system determines a second quota related to the remaining allowed service usage for the terminal;
Receiving (5), at said AAA server, a second response signal containing the second quota from said online charging system; and
Sending (6), from said AAA server, a second authentication signal (226) to said access node, wherein said second authentication signal contains a session time-out parameter (228) which is based on the second quota and a termination action parameter (230) which indicates that the access node needs to either terminate the session or initiate a second re-authentication request after exceeding a predetermined amount of time set by the session time-out parameter.

15. The method of Claim 12, wherein:
said AAA server is co-located/integrated with said online charging system; or
said AAA server is located remote from said online charging system.

16. The method of Claim 12, wherein said AAA server uses signals associated with a Diameter Credit Control Application to interact with said online charging system.

17. The method of Claim 12, wherein said AAA server uses authorization and authentication signals associated with a RADIUS/Diameter protocol to interact with said access node.

18. The method of Claim 12, wherein said AAA server uses authorization, authentication and accounting signals associated with a RADIUS/Diameter protocol to interact with said access node.

19. The method of Claim 12, wherein said quota is:
a time quota;
a volume quota; or
a combined time/volume quota.

20. A network for providing online credit control to a communications terminal (204), said network comprising an AAA server (210) and an online charging system (212), wherein:
said AAA server functions as follows:
(i) receives a signal from an access node requesting a session for the communications terminal (214) ; and
(ii) sends a request signal to said online charging system;
said online charging system functions as follows:
(i) receives the request signal from said AAA server;
(ii) performs online credit control and determines a quota related to an allowed service usage for the communication terminal; and
(iii) sends a response signal containing the quota to said AAA server;
said AAA server functions as follows:
(i) receives the response signal from said online charging system; and
(ii) sends an authentication signal to said access server, **characterized in that** said authentication signal contains a session time-out parameter dependent upon the quota, said session time-out parameter being an authentication lifetime in a RADIUS/Diameter protocol.

21. The network of Claim 20, wherein said authentication signal further contains a termination action parameter (220) which indicates that the access node needs to either terminate the session or initiate a re-authentication request after exceeding a certain amount of time set by the session time-out parameter.

22. The network of Claim 21, wherein:
said AAA server functions as follows:
(i) receives a re-authentication request signal from said access node requesting that the service be extended for the communication terminal (224);
(ii) sends a second request signal to said online charging system;
said online charging system functions as follows:
(i) receives the second request signal from said AAA server;
(ii) performs online credit control and determines a second quota related to the remaining allowed service usage for the communication terminal; and
(iii) sends a second response signal containing the second quota to said AAA server;
said AAA server functions as follows:
(i) receives the second response signal from said online charging system; and
(ii) sends a second authentication signal to said, access node (226), wherein said second authentication signal contains a session time-out parameter (228) which is based on the second quota and a termination action parameter (230) which indicates that said access node needs to either terminate the session or initiate a second re-authentication request after exceeding a predetermined amount of time set by the session time-out parameter.

23. The network of Claim 20, wherein:
said AAA server is co-located/integrated with said online charging system; or
said AAA server is located remote from said online charging system.

24. The network of Claim 20, wherein said AAA server uses signals associated with a Diameter Credit Control Application to interact with said online charging system.

25. The network of Claim 20, wherein said AAA server uses authorization and authentication signals associated with a RADIUS/Diameter protocol to interact with said access node.

26. The network of Claim 20, wherein said AAA server uses authorization, authentication and accounting signals associated with a RADIUS/Diameter protocol to interact with said access node.

27. The network of Claim 20, wherein said quota is:
a time quota;
a volume quota; or
a combined time/volume quota.

## Patentansprüche

1. AAA-Server (210), umfassend:
einen Prozessor (211);
einen Speicher (213); und
Anweisungen, die in dem Speicher zugänglich sind und von dem Prozessor verarbeitet werden können, um Folgendes zu ermöglichen:
Empfangen eines Signals (214) von einem Zugangsknoten (206), der eine Sitzung für ein Endgerät anfordert;
Interagieren mit einem Online-Gebührensystem (212) zum Empfangen einer Quote (2) im Zusammenhang mit einer zulässigen Dienstnutzung für das Endgerät (204); und
Senden eines Authentifizierungssignals (216) an den Zugangsknoten, **dadurch gekennzeichnet, dass** das Authentifizierungssignal einen Sitzungszeitüberschreitungsparameter (218) enthält, der von der Quote abhängig ist, wobei der Sitzungszeitüberschreitungsparameter eine Authentifizierungslebensdauer in einem RADIUS/Diameter-Protokoll ist.

2. AAA-Server nach Anspruch 1, wobei das Authentifizierungssignal ferner einen Beendigungsaktionsparameter (220) enthält, der angibt, dass der Zugangsknoten entweder die Sitzung (222) beenden muss oder eine Reauthentifizierungsanforderung einleiten muss, wenn eine vorgegebene Zeitmenge überschritten wurde, die von dem Sitzungszeitüberschreitungsparameter festgelegt wird.

3. AAA-Server nach Anspruch 2, wobei der Prozessor ferner Folgendes ermöglicht:
Empfangen eines Reauthentifizierungsanforderungssignals (224) von dem Zugangsknoten, das eine Verlängerung des Dienstes für das Endgerät anfordert;
Interagieren mit dem Online-Gebührensystem, das eine zweite Quote im Zusammenhang mit der verbleibenden zulässigen Dienstnutzung für das Endgerät bestimmt; und
Senden eines zweiten Authentifizierungssignals (226) an den Zugangsknoten, wobei das zweite Authentifizierungssignal einen Sitzungszeitüberschreitungsparameter (228), der auf der zweiten Quote beruht, und einen Beendigungsaktionsparameter (230) enthält, der angibt, dass der Zugangsknoten entweder die Sitzung beenden muss oder eine zweite Reauthentifizierungsanforderung einleiten muss, wenn eine vorgegebene Zeitmenge überschritten wird, die von dem Sitzungszeitüberschreitungsparameter festgelegt wird.

4. AAA-Server nach Anspruch 3, wobei der Prozessor ferner das Interagieren mit dem Online-Gebührensystem durch Senden eines Signals ermöglicht, das dem Online-Gebührensystem eine verbrauchte Quote angibt, welches dann ein Dienstkonto belastet, das dem Endgerät zugeordnet ist.

5. AAA-Server nach Anspruch 3, wobei der Prozessor ferner Folgendes ermöglicht:
Empfangen eines ACR-Signals, das das genutzte Volumen/die Nutzungsdauer angibt, von dem Zugangsknoten; und
Senden eines CCR-Signals, das genutzte Volumen/die Nutzungsdauer angibt, an das Online-Gebührensystem.

6. AAA-Server nach Anspruch 1, wobei der Prozessor die Nutzung von Signalen im Zusammenhang mit einer Diameter Credit Control Application zum Interagieren mit dem Online-Gebührensystem ermöglicht.

7. AAA-Server nach Anspruch 1, wobei der Prozessor die Nutzung von Autorisierungs- und Authentifizierungssignalen im Zusammenhang mit einem RADIUS/Diameter-Protokoll ermöglicht, um mit dem Zugangsknoten zu interagieren.

8. AAA-Server nach Anspruch 1, wobei der Prozessor die Nutzung von Autorisierungs-, Authentifizierungs- und Buchführungssignalen im Zusammenhang mit einem RADIUS/Diameter-Protokoll ermöglicht, um mit dem Zugangsknoten zu interagieren.

9. AAA-Server nach Anspruch 1, wobei die Quote Folgendes ist:
eine Zeitquote;
eine Volumenquote; oder
eine kombinierte Zeit-/Volumenquote.

10. AAA-Server nach Anspruch 9, wobei, wenn die Quote auf der Volumenquote oder der kombinierten Zeit-/Volumenquote beruht, der Prozessor eine Umwandlungsfunktion implementiert, um die Volumenquote oder die kombinierte Zeit-/Volumenquote in eine Zeitquote umzuwandeln, die in dem Sitzungszeitüberschreitungsparameter benutzt wird.

11. AAA-Server nach Anspruch 10, wobei die Umwandlungsfunktion dazu angepasst ist, die Volumenquote oder die Zeit-/Volumenquote in die Zeitquote umzuwandeln, indem sie ein zuvor erhaltenes und tatsächlich genutztes Volumen oder genutzte Zeit/genutztes Volumen benutzt.

12. Verfahren zum Implementieren von Online-Kreditkontrolle in einem Kommunikationsnetzwerk, wobei das Verfahren folgende Schritte umfasst:
Empfangen (1), an einem AAA-Server, eines Signals (214) von einem Zugangsknoten, der eine Sitzung für ein Endgerät anfordert;
Senden (2), von dem AAA-Server, eines Anforderungssignals an ein Online-Gebührensystem, wobei das Online-Gebührensystem eine Quote im Zusammenhang mit einer zulässigen Dienstnutzung für das Endgerät bestimmt;
Empfangen (2), an dem AAA-Server, eines Antwortsignals, das die Quote enthält, von dem Online-Gebührensystem; und
Senden (3), von dem AAA-Server, eines Authentifizierungssignals (216) an den Zugangsknoten, **dadurch gekennzeichnet, dass** das Authentifizierungssignal einen Sitzungszeitüberschreitungsparameter enthält, der von der Quote abhängig ist, wobei der Sitzungszeitüberschreitungsparameter eine Authentifizierungslebensdauer in einem RADIUS/Diameter-Protokoll ist.

13. Verfahren nach Anspruch 12, wobei das Authentifizierungssignal ferner einen Beendigungsaktionsparameter (220) enthält, der angibt, dass der Zugangsknoten entweder die Sitzung beenden muss oder eine Reauthentifizierungsanforderung einleiten muss, wenn eine vorgegebene Zeitmenge überschritten wurde, die von dem Sitzungszeitüberschreitungsparameter festgelegt wird.

14. Verfahren nach Anspruch 13, ferner folgende Schritte umfassend:
Empfangen (4), an dem AAA-Server, eines Reauthentifizierungsanforderungssignals (224) von dem Zugangsknoten, das eine Verlängerung des Dienstes für das Endgerät anfordert;
Senden (5), von dem AAA-Server, eines zweiten Anforderungssignals an das Online-Gebührensystem, wobei das Online-Gebührensystem eine zweite Quote im Zusammenhang mit der verbleibenden zulässigen Dienstnutzung für das Endgerät bestimmt;
Empfangen (5), an dem AAA-Server, eines zweiten Antwortsignals, das die zweite Quote enthält, von dem Online-Gebührensystem; und
Senden (6), von dem AAA-Server, eines zweiten Authentifizierungssignals (226) an den Zugangsknoten, wobei das zweite Authentifizierungssignal einen Sitzungszeitüberschreitungsparameter (228), der auf der zweiten Quote beruht, und einen Beendigungsaktionsparameter (230) enthält, der angibt, dass der Zugangsknoten entweder die Sitzung beenden muss oder eine zweite Reauthentifizierungsanforderung einleiten muss, wenn eine vorgegebene Zeitmenge überschritten wird, die von dem Sitzungszeitüberschreitungsparameter festgelegt wird.

15. Verfahren nach Anspruch 12, wobei:
der AAA-Server mit dem Online-Gebührensystem kolokalisiert ist/in dieses integriert ist; oder
der AAA-Server entfernt von dem Online-Gebührensystem angeordnet ist.

16. Verfahren nach Anspruch 12, wobei der AAA-Server Signale im Zusammenhang mit einer Diameter Credit Control Application zum Interagieren mit dem Online-Gebührensystem benutzt.

17. Verfahren nach Anspruch 12, wobei der AAA-Server Autorisierungs- und Authentifizierungssignale im Zusammenhang mit einem RADIUS/Diameter-Protokoll benutzt, um mit dem Zugangsknoten zu interagieren.

18. Verfahren nach Anspruch 12, wobei der AAA-Server Autorisierungs-, Authentifizierungs- und Buchführungssignale im Zusammenhang mit einem RADIUS/Diameter-Protokoll benutzt, um mit dem Zugangsknoten zu interagieren.

19. Verfahren nach Anspruch 12, wobei die Quote Folgendes ist:
eine Zeitquote;
eine Volumenquote; oder
eine kombinierte Zeit-/Volumenquote.

20. Netzwerk zum Bereitstellen von Online-Kreditkontrolle an ein Kommunikationsendgerät (204), wobei das Netzwerk einen AAA-Server (210) und ein Online-Gebührensystem (212) umfasst, wobei:
der AAA-Server wie folgt funktioniert:
(i) er empfängt ein Signal von einem Zugangsknoten, der eine Sitzung für das Kommunikationsendgerät (214) anfordert,
und
(ii) er sendet ein Anforderungssignal an das Online-Gebührensystem;
das Online-Gebührensystem wie folgt funktioniert:
(i) es empfängt das Anforderungssignal von dem AAA-Server;
(ii) es führt eine Online-Kreditkontrolle durch und bestimmt eine Quote im Zusammenhang mit einer zulässigen Dienstnutzung für das Kommunikationsendgerät; und
(iii) es sendet ein Antwortsignal an den AAA-Server, das die Quote enthält;
der AAA-Server wie folgt funktioniert:
(i) er empfängt das Antwortsignal von dem Online-Gebührensystem; und
(ii) er sendet ein Authentifizierungssignal an den Zugangsserver, **dadurch gekennzeichnet, dass** das Authentifizierungssignal einen Sitzungszeitüberschreitungsparameter enthält, der von der Quote abhängig ist, wobei der Sitzungszeitüberschreitungsparameter eine Authentifizierungslebensdauer in einem RADIUS/Diameter-Protokoll ist.

21. Netzwerk nach Anspruch 20, wobei das Authentifizierungssignal ferner einen Beendigungsaktionsparameter (220) enthält, der angibt, dass der Zugangsknoten entweder die Sitzung beenden muss oder eine Reauthentifizierungsanforderung einleiten muss, wenn eine bestimmte Zeitmenge überschritten wurde, die von dem Sitzungszeitüberschreitungsparameter festgelegt wird.

22. Netzwerk nach Anspruch 21, wobei:
der AAA-Server wie folgt funktioniert:
(i) er empfängt ein Reauthentifizierungsanforderungssignal von dem Zugangsknoten, das eine Verlängerung des Dienstes für das Kommunikationsendgerät (224) anfordert;
(ii) er sendet ein zweites Anforderungssignal an das Online-Gebührensystem;
das Online-Gebührensystem wie folgt funktioniert:
(i) es empfängt das zweite Anforderungssignal von dem AAA-Server;
(ii) es führt eine Online-Kreditkontrolle durch und bestimmt eine zweite Quote im Zusammenhang mit der verbleibenden zulässigen Dienstnutzung für das Kommunikationsendgerät; und
(iii) es sendet ein zweites Antwortsignal an den AAA-Server, das die zweite Quote enthält;
der AAA-Server wie folgt funktioniert:
(i) er empfängt das zweite Antwortsignal von dem Online-Gebührensystem; und
(ii) er sendet ein zweites Authentifizierungssignal an den Zugangsknoten (226), wobei das zweite Authentifizierungssignal einen Sitzungszeitüberschreitungsparameter (228), der auf der zweiten Quote beruht, und einen Beendigungsaktionsparameter (230) enthält, der angibt, dass der Zugangsknoten entweder die Sitzung beenden muss oder eine zweite Reauthentifizierungsanforderung einleiten muss, wenn eine vorgegebene Zeitmenge überschritten wird, die von dem Sitzungszeitüberschreitungsparameter festgelegt wird.

23. Netzwerk nach Anspruch 20, wobei:
der AAA-Server mit dem Online-Gebührensystem kolokalisiert ist/in dieses integriert ist; oder
der AAA-Server entfernt von dem Online-Gebührensystem angeordnet ist.

24. Netzwerk nach Anspruch 20, wobei der AAA-Server Signale im Zusammenhang mit einer Diameter Credit Control Application zum Interagieren mit dem Online-Gebührensystem benutzt.

25. Netzwerk nach Anspruch 20, wobei der AAA-Server Autorisierungs- und Authentifizierungssignale im Zusammenhang mit einem RADIUS/Diameter-Protokoll benutzt, um mit dem Zugangsknoten zu interagieren.

26. Netzwerk nach Anspruch 20, wobei der AAA-Server Autorisierungs-, Authentifizierungs- und Buchführungssignale im Zusammenhang mit einem RADIUS/Diameter-Protokoll benutzt, um mit dem Zugangsknoten zu interagieren.

27. Netzwerk nach Anspruch 20, wobei die Quote Folgendes ist:
eine Zeitquote;
eine Volumenquote; oder
eine kombinierte Zeit-/Volumenquote.

## Revendications

1. Serveur AAA (210) comprenant :
un processeur (211) ;
une mémoire (213) ; et
des instructions accessibles à partir de ladite mémoire et pouvant être traitées par ledit processeur pour faciliter
la réception d'un signal (214) à partir d'un noeud d'accès (206) demandant une session pour un terminal ;
l'interaction avec un système de facturation en ligne (212) pour recevoir un quota (2) relatif à une utilisation de service autorisée pour le terminal (204) ; et
l'envoi d'un signal d'authentification (216) audit noeud d'accès, **caractérisé en ce que** ledit signal d'authentification contient un paramètre de délai d'expiration de session (218) dépendant du quota, ledit paramètre de délai d'expiration de session étant une durée de vie d'authentification dans un protocole RADIUS/Diameter.

2. Serveur AAA selon la revendication 1, dans lequel ledit signal d'authentification contient en outre un paramètre d'action de terminaison (220) qui indique que le noeud d'accès doit soit terminer la session (222) soit lancer une demande de réauthentification après le dépassement d'une quantité de temps prédéterminée définie par le paramètre d'expiration de session.

3. Serveur AAA selon la revendication 2, dans lequel ledit processeur facilite en outre :
la réception d'un signal de demande de réauthentification (224) à partir dudit noeud d'accès demandant que le service soit prolongé pour le terminal ;
l'interaction avec ledit système de facturation en ligne qui détermine un deuxième quota relatif à l'utilisation de service autorisée restante pour le terminal ; et
l'envoi d'un deuxième signal d'authentification (226) audit noeud d'accès, dans lequel ledit deuxième signal d'authentification contient un paramètre de délai d'expiration de session (228) qui est basé sur le deuxième quota et un paramètre d'action de terminaison (230) qui indique que le noeud d'accès doit soit terminer la session soit lancer une deuxième demande de réauthentification après le dépassement d'une quantité de temps prédéterminée définie par le paramètre d'expiration de session.

4. Serveur AAA selon la revendication 3, dans lequel ledit processeur facilite en outre l'interaction avec ledit système de facturation en ligne en envoyant un signal indiquant un quota utilisé audit système de facturation en ligne qui débite ensuite un compte de service associé au terminal.

5. Serveur AAA selon la revendication 3, dans lequel ledit processeur facilite en outre :
la réception d'un signal ACR indiquant un volume/temps utilisés à partir dudit noeud d'accès ; et
l'envoi d'un signal CCR indiquant le volume/temps utilisés audit système de facturation en ligne.

6. Serveur AAA selon la revendication 1, dans lequel ledit processeur facilite l'utilisation de signaux associés à une application de contrôle de crédit Diameter pour interagir avec ledit système de facturation en ligne.

7. Serveur AAA selon la revendication 1, dans lequel ledit processeur facilite l'utilisation de signaux d'autorisation et d'authentification associés à un protocole RADIUS/Diameter pour interagir avec ledit noeud d'accès.

8. Serveur AAA selon la revendication 1, dans lequel ledit processeur facilite l'utilisation de signaux d'autorisation, d'authentification et de comptabilité associés à un protocole RADIUS/Diameter pour interagir avec ledit noeud d'accès.

9. Serveur AAA selon la revendication 1, dans lequel ledit quota est :
un quota de temps ;
un quota de volume ; ou
un quota de temps/volume combiné.

10. Serveur AAA selon la revendication 9, dans lequel si ledit quota est basé sur ledit quota de volume ou ledit quota de temps/volume combiné, alors ledit processeur met en oeuvre une fonction de transformation pour transformer ledit quota de volume ou ledit quota de temps/volume combiné en un quota de temps qui est utilisé dans ledit paramètre de délai d'expiration de session.

11. Serveur AAA selon la revendication 10, dans lequel ladite fonction de transformation est adaptée pour transformer ledit quota de volume ou de temps/volume combiné en ledit quota de temps en utilisant un volume précédemment reçu et effectivement utilisé ou un temps/volume utilisé.

12. Procédé de mise en oeuvre d'un contrôle de crédit en ligne dans un réseau de communication, ledit procédé comprenant les étapes suivantes :
la réception (1), au niveau d'un serveur AAA, d'un signal (214) provenant d'un noeud d'accès demandant une session pour un terminal ;
l'envoi (2), à partir dudit serveur AAA, d'un signal de demande à un système de facturation en ligne, dans lequel ledit système de facturation en ligne détermine un quota relatif à une utilisation de service autorisée pour le terminal ;
la réception (2), au niveau dudit serveur AAA, d'un signal de réponse contenant le quota à partir dudit système de facturation en ligne ; et
l'envoi (3), à partir dudit serveur AAA, d'un signal d'authentification (216) audit noeud d'accès, **caractérisé en ce que** ledit signal d'authentification contient un paramètre de délai d'expiration de session dépendant du quota, ledit paramètre de délai d'expiration de session étant une durée de vie d'authentification dans un protocole RADIUS/Diameter.

13. Procédé selon la revendication 12, dans lequel ledit signal d'authentification contient en outre un paramètre d'action de terminaison (220) qui indique que le noeud d'accès doit soit terminer la session soit lancer une demande de réauthentification après le dépassement d'une quantité de temps prédéterminée définie par le paramètre d'expiration de session.

14. Procédé selon la revendication 13, comprenant en outre les étapes suivantes :
la réception (4), au niveau dudit serveur AAA, d'un signal de demande de réauthentification (224) à partir dudit noeud d'accès demandant que le service soit prolongé pour le terminal ;
l'envoi (5), à partir dudit serveur AAA, d'un deuxième signal de demande audit système de facturation en ligne, dans lequel ledit système de facturation en ligne détermine un deuxième quota relatif à l'utilisation de service autorisée restante pour le terminal ;
la réception (5), au niveau dudit serveur AAA, d'un deuxième signal de réponse contenant le deuxième quota à partir dudit système de facturation en ligne ; et
l'envoi (6), à partir dudit serveur AAA, d'un deuxième signal d'authentification (226) audit noeud d'accès, dans lequel ledit deuxième signal d'authentification contient un paramètre de délai d'expiration de session (228) qui est basé sur le deuxième quota et un paramètre d'action de terminaison (230) qui indique que le noeud d'accès doit soit terminer la session soit lancer une deuxième demande de réauthentification après le dépassement d'une quantité de temps prédéterminée définie par le paramètre d'expiration de session.

15. Procédé selon la revendication 12, dans lequel :
ledit serveur AAA est co-localisé/intégré avec ledit système de facturation en ligne ; ou
ledit serveur AAA est situé à distance dudit système de facturation en ligne.

16. Procédé selon la revendication 12, dans lequel ledit serveur AAA utilise des signaux associés à une application de contrôle de crédit Diameter pour interagir avec ledit système de facturation en ligne.

17. Procédé selon la revendication 12, dans lequel ledit serveur AAA utilise des signaux d'autorisation et d'authentification associés à un protocole RADIUS/Diameter pour interagir avec ledit noeud d'accès.

18. Procédé selon la revendication 12, dans lequel ledit serveur AAA utilise des signaux d'autorisation, d'authentification et de comptabilité associés à un protocole RADIUS/Diameter pour interagir avec ledit noeud d'accès.

19. Procédé selon la revendication 12, dans lequel ledit quota est :
un quota de temps ;
un quota de volume ; ou
un quota de temps/volume combiné.

20. Réseau pour fournir un contrôle de crédit en ligne à un terminal de communication (204), ledit réseau comprenant un serveur AAA (210) et un système de facturation en ligne (212), dans lequel :
ledit serveur AAA fonctionne comme suit :
(i) il reçoit un signal provenant d'un noeud d'accès demandant une session pour le terminal de communication (214) ; et
(ii) il envoie un signal de demande audit système de facturation en ligne ;
ledit système de facturation en ligne fonctionne comme suit :
(i) il reçoit le signal de demande provenant dudit serveur AAA ;
(ii) il effectue un contrôle de crédit en ligne et détermine un quota relatif à une utilisation de service autorisée pour le terminal de communication ; et
(iii) il envoie un signal de réponse contenant le quota audit serveur AAA ;
ledit serveur AAA fonctionne comme suit :
(i) il reçoit le signal de réponse à partir dudit système de facturation en ligne ; et
(ii) il envoie un signal d'authentification audit serveur d'accès, **caractérisé en ce que** ledit signal d'authentification contient un paramètre de délai d'expiration de session dépendant du quota, ledit paramètre de délai d'expiration de session étant une durée de vie d'authentification dans un protocole RADIUS/Diameter.

21. Réseau selon la revendication 20, dans lequel ledit signal d'authentification contient en outre un paramètre d'action de terminaison (220) qui indique que le noeud d'accès doit soit terminer la session soit lancer une demande de réauthentification après le dépassement d'une certaine quantité de temps définie par le paramètre d'expiration de session.

22. Réseau selon la revendication 21, dans lequel :
ledit serveur AAA fonctionne comme suit :
(i) il reçoit un signal de demande de réauthentification provenant dudit noeud d'accès demandant que le service soit prolongé pour le terminal de communication (224) ;
(ii) il envoie un deuxième signal de demande audit système de facturation en ligne ;
ledit système de facturation en ligne fonctionne comme suit :
(i) il reçoit le deuxième signal de demande provenant dudit serveur AAA ;
(ii) il effectue un contrôle de crédit en ligne et détermine un deuxième quota relatif à l'utilisation de service autorisée restante pour le terminal de communication et
(iii) il envoie un deuxième signal de réponse contenant le deuxième quota audit serveur AAA ;
ledit serveur AAA fonctionne comme suit :
(i) il reçoit le deuxième signal de réponse à partir dudit système de facturation en ligne ; et
(ii) il envoie un deuxième signal d'authentification audit noeud d'accès (226), dans lequel ledit deuxième signal d'authentification contient un paramètre de délai d'expiration de session (228) qui est basé sur le deuxième quota et un paramètre d'action de terminaison (230) qui indique que ledit noeud d'accès doit soit terminer la session soit lancer une deuxième demande de réauthentification après le dépassement d'une quantité de temps prédéterminée définie par le paramètre d'expiration de session.

23. Réseau selon la revendication 20, dans lequel :
ledit serveur AAA est co-localisé/intégré avec ledit système de facturation en ligne ; ou
ledit serveur AAA est situé à distance dudit système de facturation en ligne.

24. Réseau selon la revendication 20, dans lequel ledit serveur AAA utilise des signaux associés à une application de contrôle de crédit Diameter pour interagir avec ledit système de facturation en ligne.

25. Réseau selon la revendication 20, dans lequel ledit serveur AAA utilise des signaux d'autorisation et d'authentification associés à un protocole RADIUS/Diameter pour interagir avec ledit noeud d'accès.

26. Réseau selon la revendication 20, dans lequel ledit serveur AAA utilise des signaux d'autorisation, d'authentification et de comptabilité associés à un protocole RADIUS/Diameter pour interagir avec ledit noeud d'accès.

27. Réseau selon la revendication 20, dans lequel ledit quota est :
un quota de temps ;
un quota de volume ; ou
un quota de temps/volume combiné.
